# FASCICULE DE BREVET EUROPEEN

(11) **EP 1 052 201 B1**
(45) Date de publication et mention de la délivrance du brevet: **03.03.2004**
(21) Numéro de dépôt: 00401212.6
(22) Date de dépôt: 03.05.2000
(51) Int. Cl.: B65G 47/91

(54) **Tête de préhension par aspiration**
Sauggreifer
Suction gripper

(30) Priorité: 07.05.1999 FR 9905851
(43) Date de publication de la demande: 15.11.2000
(73) Titulaire: Joulin, Michel, 91150 Morigny (FR)
(72) Inventeur: Joulin, Michel, 91150 Morigny (FR)
(74) Mandataire: Fruchard, Guy

(56) Documents cités:
- FR-A- 2 640 600
- US-A- 4 674 785

## Description

La présente invention concerne une tête de préhension par aspiration.

On connaît des systèmes de préhension et de transport de matériau tels que des planches, des plaques de tôle ou des matériaux analogues. Ces systèmes comprennent une structure montée mobile le long d'un châssis et comportant une tête de préhension par aspiration.

Dans les systèmes connus, les têtes de préhension par aspiration comprennent un caisson relié à un dispositif d'aspiration, généralement une turbine, portée par le châssis du système. Le caisson de la tête de préhension comporte une semelle supportant des rangées de compartiments indépendants comprenant chacun un orifice inférieur débouchant sur la face inférieure de la semelle et un orifice supérieur équipé d'un organe de fermeture mobile monté dans le compartiment pour pouvoir fermer l'orifice supérieur lorsque l'orifice inférieur n'est pas obturé par un article à soulever et que la dépression est suffisante pour assurer une aspiration du clapet. Dans le cas où l'orifice inférieur du compartiment est obturé par un objet à soulever, le clapet reste ouvert et la dépression à l'intérieur du caisson sert alors à plaquer l'objet contre la semelle de la tête de préhension. Pour assurer une meilleure étanchéité du contact de la semelle avec l'article à soulever, on prévoit de préférence sous la semelle un matériau d'étanchéité tel qu'une mousse dont les caractéristiques sont adaptées à l'état de surface des articles à soulever.

Une telle structure permet de manipuler des objets ayant des dimensions variées même lorsque ceux-ci n'occupent qu'une partie de la surface de la semelle de la tête de préhension. Dans le cas où l'on souhaite pouvoir soulever une multiplicité d'articles de faibles dimensions ou des articles de contour variable, il est nécessaire de décomposer la surface de la semelle en un très grand nombre de compartiments également de faibles dimensions afin de s'assurer que chaque article pourra obturer totalement l'orifice inférieur d'un nombre suffisant de compartiments pour permettre la préhension de l'article.

Par ailleurs, pour pouvoir maintenir une dépression suffisante dans les compartiments en regard d'articles à soulever, il est nécessaire que tous les organes de fermeture mobile des compartiments qui ne sont pas en regard d'articles à soulever soient fermés très rapidement lors de la préhension des articles. Le soulèvement de chaque organe de fermeture pour l'appliquer contre l'orifice supérieur du compartiment correspondant, implique un certain débit à travers l'orifice supérieur de ce compartiment. Lorsque les organes de fermeture d'un grand nombre de compartiments doivent être soulevés en raison de la faible surface des articles à saisir il est donc nécessaire d'assurer un grand débit d'aspiration dans le caisson. Toutefois, pour assurer une force de soulèvement suffisante des articles à manipuler, il est nécessaire de faire fonctionner les turbines d'aspiration dans un mode procurant une forte dépression mais avec en contrepartie un faible débit ne permettant pas de soulever simultanément un grand nombre d'organes de fermeture.

Pour pallier cet inconvénient, on connaît, notamment des documents FR-A-2 640 600 et US-A-4 674 785, des têtes de préhension comportant un volume tampon relié au caisson contenant les compartiments de préhension, une trappe étant disposée pour séparer le volume tampon du caisson jusqu'à ce qu'un certain niveau de dépression soit obtenu dans le volume tampon. L'ouverture de la trappe permet alors une aspiration à un débit proportionné à la dimension du volume tampon. Afin d'assurer un grand débit, il est donc nécessaire de prévoir des volumes tampon de grande dimension. Ceci implique non seulement un encombrement important de la tête de préhension mais également un poids accru de celle-ci, ce qui constitue des inconvénients majeurs pour une structure mobile. En outre, une aspiration brutale à travers l'ensemble des compartiments qui ne sont pas en regard d'articles à soulever, provoque une aspiration d'une quantité importante de poussière qui se dépose ensuite dans le caisson en formant des amas qui nuisent au bon fonctionnement de la tête de préhension. De plus, la décompression brutale de l'ensemble du caisson et du volume tampon lors de la dépose des articles génère un bruit important provoquant une détérioration des conditions de travail des opérateurs du système de préhension.

Afin de remédier à ces inconvénients on propose selon l'invention une tête de préhension par aspiration comprenant une semelle supportant des rangées de compartiments comprenant chacun un orifice inférieur débouchant sur la face inférieure de la semelle et un orifice supérieur équipé d'un organe de fermeture mobile, et des moyens de liaison pour mettre les orifices supérieurs des compartiments en relation avec un dispositif d'aspiration, dans laquelle les moyens de liaison comportent un cloisonnement assurant une fermeture en cascade par dépression des orifices supérieurs des compartiments qui ne sont pas en regard d'un article à soulever lors d'une mise en liaison avec le dispositif d'aspiration.

Ainsi, au lieu d'assurer un déplacement simultané de l'ensemble des organes de fermeture des compartiments qui ne sont pas en regard d'un article à soulever, on assure une fermeture en cascade de ces mêmes compartiments, de sorte que le débit instantané nécessaire est considérablement diminué et il est donc possible de diminuer, voire même de supprimer le volume tampon qui était nécessaire dans les dispositifs antérieurs. En outre, le déplacement d'air à l'intérieur de la tête de préhension est canalisé par le cloisonnement de sorte que les poussières aspirées lors de la préhension sont progressivement entraînées vers la turbine puis éjectées par celle-ci.

Selon une version avantageuse de l'invention, le cloisonnement comprend un collecteur ayant des branches disposées à l'aplomb des rangées de compartiments, les branches étant reliées entre elles selon des liaisons série ou parallèle. Ainsi, dans chaque branche du collecteur, les compartiments sont reliés en série et la tête de préhension est aisément adaptée à des conditions de fonctionnement particulières en effectuant les liaisons série ou parallèle correspondantes entre les différentes branches du collecteur.

Selon un autre aspect avantageux de l'invention, la tête de préhension comporte des parois formant un caisson étanche autour du collecteur, le dispositif d'aspiration est relié au caisson, le collecteur comporte un orifice d'aspiration débouchant à l'intérieur du caisson et un conduit d'échappement débouchant à l'extérieur du caisson, et des trappes sont associées à l'orifice d'aspiration et au conduit d'échappement. Ainsi, le volume compris entre le collecteur et les parois du caisson sert de volume tampon de sorte que sans augmenter l'encombrement de la tête de préhension, on obtient un fonctionnement plus rapide de celle-ci.

D'autres caractéristiques et avantages de l'invention ressortiront à la lecture de la description qui suit de deux modes de réalisation particuliers non limitatifs de l'invention, en référence aux figures ci-jointes parmi lesquelles :
- la figure 1 est une vue en perspective schématique partiellement écorchée d'une tête de préhension selon l'invention,
- la figure 2 est une vue de dessus schématique d'un collecteur selon un deuxième mode de réalisation de l'invention.

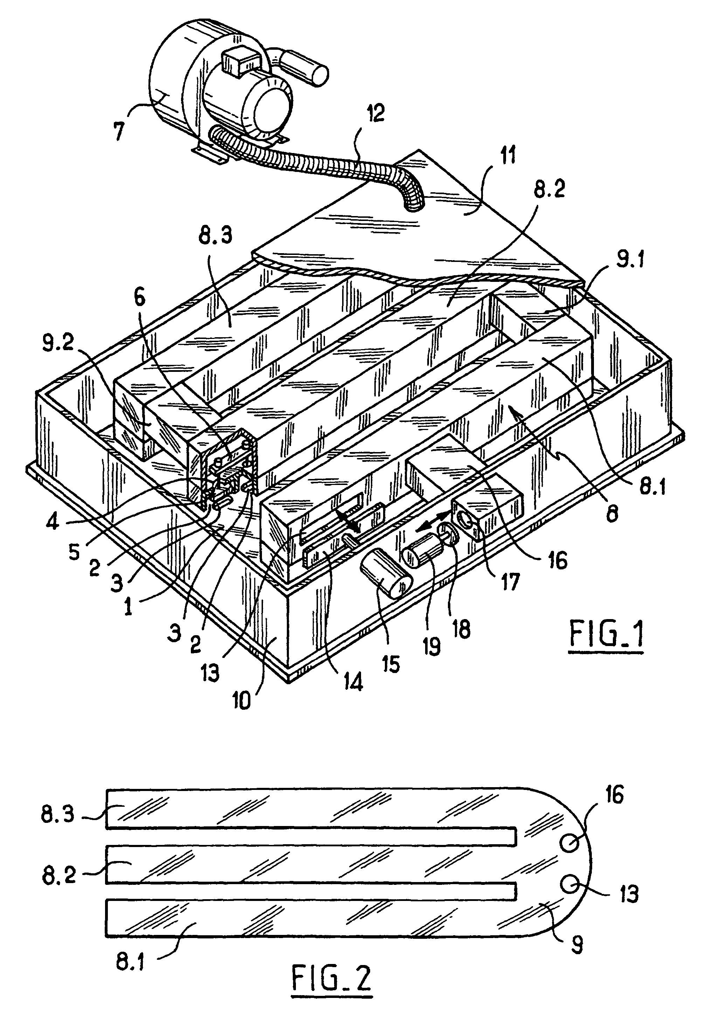

En référence à la figure 1, la tête de préhension comporte de façon connue en soi une semelle 1 supportant des rangées de compartiments 2 dont deux seulement sont visibles sur l'écorché de la figure. Chaque compartiment 2 comporte un orifice inférieur 3 débouchant sur la face inférieure de la semelle et un orifice supérieur 4 équipé d'un organe de fermeture mobile 5. Dans le mode de réalisation illustré, l'organe de fermeture 5 est un clapet fixé à une tige traversant l'orifice supérieur 4 et associée à un organe de guidage 6. Dans le mode de réalisation illustré, la tête de préhension ne comporte que trois rangées de compartiments 2 bien qu'en pratique ce nombre ne soit pas limitatif.

Selon l'invention, la tête de préhension comporte un cloisonnement assurant une mise en série d'au moins une partie des orifices supérieurs 4 des compartiments 2 par rapport à un dispositif d'aspiration 7. Dans le mode de réalisation illustré, le cloisonnement comprend un collecteur généralement désigné en 8 ayant trois branches, respectivement 8.1, 8.2, et 8.3, respectivement disposées à l'aplomb des rangées de compartiment 2. Dans le mode de réalisation de la figure 1, les branches du collecteur 8 sont reliées en série par des conduits de liaison 9.1 et 9.2.

Par ailleurs, la tête de préhension comporte une paroi latérale 10 fixée de façon étanche à la semelle 1 et entourant le collecteur 8, et un couvercle 11 fixé de façon étanche à la paroi latérale 10 pour former un caisson étanche autour du collecteur 8. La turbine d'aspiration 7 est reliée à l'intérieur du caisson ainsi réalisé par un conduit flexible 12.

Au voisinage d'une de ses extrémités, le collecteur comporte un orifice d'aspiration 13 débouchant à l'intérieur du caisson, en regard duquel est montée un trappe 14 fixée à l'extrémité de la tige de manoeuvre d'un vérin 15 monté sur la paroi latérale 10 du caisson. Un conduit d'échappement 16 est également relié au collecteur 8 de façon adjacente à l'orifice d'aspiration 13 au-delà de celui-ci par rapport à l'extrémité du collecteur qui est voisine de l'orifice d'aspiration 13. Le conduit d'échappement 16 comporte un orifice d'échappement latéral 17 à l'extérieur du caisson. Une trappe 18 est portée par un vérin de manoeuvre 19 fixé à la paroi latérale 10 du caisson pour s'étendre en regard de l'orifice d'échappement 17.

Le fonctionnement du dispositif selon l'invention est le suivant : les trappes 14 et 18 étant appliquées sur les orifices correspondants, la turbine 7 est mise en route et met progressivement en dépression le volume compris entre le collecteur 8 et la paroi latérale 10 du caisson. Lorsque le niveau de dépression requis est atteint, la trappe 14 est déplacée pour dégager l'ouverture d'aspiration 13 et la dépression se propage dans le collecteur 8 en fermant successivement les compartiments 2 qui ne sont pas en regard d'un article à soulever, tout d'abord dans la branche 8.1 du collecteur puis dans la branche 8.2 et enfin dans la branche 8.3. On remarquera que la vitesse de propagation de la dépression dans le collecteur 8 dépendra du débit d'air à travers l'ouverture d'aspiration 13. En pratique, compte tenu de la faible section du collecteur 8, il s'est avéré que la dépression se propageait très rapidement dans le collecteur 8 même en l'absence d'utilisation du volume tampon c'est-à-dire en ouvrant l'office d'aspiration 13 dès la mise en route de la turbine 7. L'utilisation du volume tampon permet donc d'augmenter la vitesse de propagation de la dépression ou d'augmenter le nombre de compartiments pour une turbine d'aspiration donnée.

Après manipulation des articles saisis par la tête de préhension, ceux-ci sont déposés en procédant à la fermeture de l'orifice d'aspiration 13 par la trappe 14 et en ouvrant l'orifice d'échappement 17. L'air à la pression ambiante admis par l'orifice d'échappement 17 se propage dans le collecteur 8 et assure la dépose des objets saisis ainsi que la réouverture des orifices supérieurs des compartiments qui ne se trouvaient pas en regard d'un objet. On remarquera à ce propos qu'en raison de la disposition particulière du conduit d'échappement par rapport à l'orifice d'aspiration, toute aspiration résiduelle résultant d'un défaut d'étanchéité de la trappe 14 est compensée par l'entrée d'air dans le conduit d'échappement 16, de sorte qu'il n'en résulte aucun maintien en dépression du collecteur 8.

En référence à la figure 2, les trois branches 8.1, 8.2 et 8.3 du collecteur selon le deuxième mode de réalisation illustré sont montées en parallèle par un conduit de liaison 9 associé à une même extrémité des branches 8.1, 8.2 et 8.3 et comportant l'orifice d'aspiration 13 et le conduit d'échappement 16. Cette disposition permet de réaliser simultanément une mise en dépression de chacune des trois branches du collecteur, ce qui permet d'accélérer la manoeuvre des clapets des compartiments. Ceci suppose toutefois que le débit à travers l'orifice d'aspiration 13 soit suffisant pour assurer simultanément la mise en dépression de chacune des branches.

Bien entendu, l'invention n'est pas limitée aux modes de réalisation décrits et on peut y apporter des variantes de réalisation sans sortir du cadre de l'invention tel que défini par les revendications.

En particulier, bien que la tête de préhension selon l'invention ait été illustrée en relation avec des organes de fermeture sous forme de clapets, l'invention s'applique à une tête de préhension quel que soit le type d'organes de fermeture utilisés.

Bien que l'invention ait été illustrée avec un collecteur disposé au-dessus des rangées de compartiments et fixé à la paroi supérieure de ces compartiments, on peut prévoir un collecteur enveloppant les rangées de compartiments et fixé à la semelle 1.

Bien que l'invention ait été illustrée en relation avec un collecteur de section constante dont les branches sont reliées entre elles en série ou en parallèle, on peut prévoir un collecteur de section variable et une combinaison de liaisons série et de liaisons parallèle des différentes branches en fonction des conditions d'utilisation de la tête de préhension, en particulier en fonction de la nature et de la forme des objets à soulever ainsi que des caractéristiques de fonctionnement du dispositif d'aspiration associé.

Au lieu d'être réalisé sous forme d'un collecteur comme illustré sur la figure 1, la tête de préhension selon l'invention peut être réalisée sous forme d'un cloisonnement du caisson par des parois s'étendant entre la semelle et le couvercle, ces parois délimitant des zones dans lesquelles les compartiments sont disposés en série, les différentes zones étant associées en série ou en parallèle par des trappes disposées de façon appropriée à l'intérieur du caisson ou par des conduits extérieurs au caisson en prévoyant en outre des ouvertures obturables par des volets dans le couvercle du caisson. Dans un mode de réalisation de ce type le cloisonnement a en outre une fonction de raidissement du caisson. Dans ce cas, il n'est pas nécessaire de prévoir les éléments raidisseurs habituellement utilisés de sorte que l'encombrement et le poids du caisson peuvent être minimisés.

Le nettoyage de la tête de préhension selon l'invention peut également être amélioré en prévoyant de relier le refoulement de la turbine 7 au conduit d'échappement. Cette disposition permet en outre une dépose plus rapide des articles transportés.

On peut également prévoir une aspiration et une mise à l'échappement séparées dans les différentes branches du collecteur pour effectuer une prise ou une dépose partielle d'une série d'objets. Dans ce cas il est également possible de prévoir la mise en dépression décalée de chacune des branches du collecteur.

Ainsi qu'il a été exposé ci-dessus, pour un faible nombre de compartiments, le débit de la turbine peut s'avérer suffisant pour manoeuvrer les clapets et assurer la mise en dépression du collecteur. Dans ce cas il est possible de relier directement la turbine au collecteur en supprimant la paroi latérale et le couvercle de la tête de préhension. Le poids de la tête de préhension est ainsi diminué et sa mobilité est améliorée.

Dans le mode de réalisation décrit les branches du collecteur sont fermées à leurs extrémités, la liaison entre les branches étant assurée par les conduits de liaison 9. Dans les cas où l'on veut réaliser un simple montage en parallèle des branches du collecteur sans réalisation d'un volume tampon il suffit que chaque branche du collecteur soit ouverte à une extrémité ou aux deux extrémités et de faire déboucher le conduit d'échappement dans l'une des parois du caisson.

## Revendications

1. Tête de préhension par aspiration comprenant une semelle (1) supportant des rangées de compartiments (2) comprenant chacun un orifice inférieur (3) débouchant sur la face inférieure de la semelle et un orifice supérieur (4) équipé d'un organe de fermeture mobile (5), et des moyens de liaison pour mettre les orifices supérieurs (4) des compartiments en relation avec un dispositif d'aspiration (7), **caractérisée en ce que** les moyens de liaison comportent un cloisonnement (8) assurant une fermeture en cascade par dépression des orifices supérieurs (4) des compartiments qui ne sont pas en regard d'un article à soulever lors d'une mise en liaison avec le dispositif d'aspiration (7).

2. Tête de préhension selon la revendication 1, **caractérisée en ce que** le cloisonnement comprend un collecteur (8) ayant des branches (8.1, 8.2, 8.3) disposées à l'aplomb des rangées de compartiments, les branches du collecteur étant reliées entre elles selon des liaisons série ou parallèle.

3. Tête de préhension selon la revendication 2, **caractérisée en ce qu'**elle comporte des parois (10, 11) formant un caisson étanche autour du collecteur, **en ce que** le dispositif d'aspiration (7) est relié au caisson, **en ce que** le collecteur (8) comporte un orifice d'aspiration (13) débouchant à l'intérieur du caisson et un conduit d'échappement (16) débouchant à l'extérieur du caisson, et **en ce que** des trappes (14, 18) sont associées à l'orifice d'aspiration et au conduit d'échappement.

4. Tête de préhension selon la revendication 3, **caractérisée en ce que** l'orifice d'aspiration (13) est adjacent à une extrémité du collecteur et le conduit d'échappement (16) est adjacent à l'orifice d'aspiration (13) au-delà de celui-ci par rapport à l'extrémité du collecteur.

5. Tête de préhension selon la revendication 3 ou la revendication 4, **caractérisée en ce que** les trappes (14, 18) sont commandées par des vérins (15, 19) disposés sur le côté du caisson.

## Claims

1. A suction pick-up head comprising a soleplate (1) supporting rows of compartments (2) each comprising a bottom orifice (3) opening out through the bottom face of the soleplate and a top orifice (4) fitted with a moving closure member (5), and connection means for putting the top orifices (4) of the compartments into communication with a suction device (7), the head being **characterized in that** the connection means comprise partitioning (8) providing a closure in cascade of the top orifices (4) of the which are not in register with an article to be picked up upon connection with the suction device.

2. A pick-up head according to claim 1, **characterized in that** the partitioning comprises a manifold (8) having branches (8.1, 8.2, 8.3) disposed vertically in register with rows of compartments, the branches of the manifold being interconnected via connections in series or in parallel.

3. A pick-up head according to claim 2, **characterized in that** it has walls (10, 11) forming a leakproof box around the manifold, **in that** the suction device is connected to the box, **in that** the manifold (8) has a suction orifice opening out to the inside of the box and an exhaust orifice (16) opening out to the outside of the box, and **in that** respective shutters (14, 18) are associated with the suction orifice and the exhaust orifice.

4. A pick-up head according to claim 3, **characterized in that** the suction orifice (13) is adjacent to one end of the manifold and the exhaust orifice (16) is adjacent to the suction orifice (13), and beyond it relative to the end of the manifold.

5. A pick-up head according to claim 3 or claim 4, **characterized in that** the shutters (14, 18) are controlled by respective actuators (15, 19) disposed on the side of the box.

## Patentansprüche

1. Sauggreifkopf, umfassend eine Grundplatte (1), die Reihen von Fächern (2) trägt, die jeweils eine untere Öffnung (3), die an der Unterseite der Grundplatte mündet, und eine obere Öffnung (4) haben, die mit einem beweglichen Schließelement (5) versehen ist, sowie Verbindungsmittel zum Verbinden der oberen Öffnungen (4) der Fächer mit einer Saugvorrichtung (7), **dadurch gekennzeichnet, daß** die Verbindungsmittel eine Abtrennung (8) umfassen, die während einer Verbindung mit der Saugvorrichtung (7) sicherstellt, daß die oberen Öffnungen (4) der Fächer, die sich nicht gegenüber einem anzuhebenden Gegenstand befinden, kaskadenartig durch Unterdruck geschlossen werden.

2. Greifkopf nach Anspruch 1, **dadurch gekennzeichnet, daß** die Abtrennung eine Sammelleitung (8) mit Zweigen (8.1, 8.2, 8.3) umfaßt, die senkrecht oberhalb der Reihen von Fächern angeordnet sind, wobei die Zweige der Sammelleitung miteinander gemäß einer seriellen oder einer parallelen Verbindung verbunden sind.

3. Greifkopf nach Anspruch 2, **dadurch gekennzeichnet, daß** er Wände (10, 11) umfaßt, die einen dichten Kasten um die Sammelleitung herum bilden, daß die Saugvorrichtung (7) mit dem Kasten verbunden ist, daß die Sammelleitung (8) eine Saugöffnung (13) hat, die im Inneren des Kastens mündet, sowie eine Auslaßleitung (16), die außerhalb des Kastens mündet, und daß Klappen (14, 18) der Saugöffnung und dem Auslaßkanal zugeordnet sind.

4. Greifkopf nach Anspruch 3, **dadurch gekennzeichnet, daß** die Saugöffnung (13) an ein Ende der Sammelleitung angrenzt und der Auslaßkanal (16) an die Saugöffnung (13) angrenzt, jenseits derselben in bezug auf das Ende der Sammelleitung.

5. Greifkopf nach Anspruch 3 oder Anspruch 4, **dadurch gekennzeichnet, daß** die Klappen (14, 18) durch Arbeitszylinder (15, 19) gesteuert werden, die an der Seite des Kastens angeordnet sind.
